# EUROPEAN PATENT APPLICATION

(11) **EP 3 196 554 A1**
(43) Date of publication of application: **26.07.2017**
(21) Application number: 17151800.4
(22) Date of filing: 17.01.2017
(51) Int. Cl.: F23R 3/28, F02M 61/18, F23D 11/38

(54) **DISCRETE JET ORIFICES**

(30) Priority: 21.01.2016 US 201615003561
(71) Applicant: Delavan, Inc., West Des Moines, IA 50265 (US)
(72) Inventor: MYERS, Steve J., Norwalk, IA Iowa 50211 (US); TIBBS, Andy W., Earlham, IA Iowa 50072 (US); SAMO, Joseph, Johnston, IA Iowa 50131 (US); RYON, Jason A., Carlisle, IA Iowa 50047 (US)
(74) Representative: Stevens, Jason Paul

(57) **Abstract**

A nozzle tip (100) includes a nozzle tip body (108) defining an upstream surface (102) and an opposed downstream surface (106). An outlet orifice (104) is defined through the nozzle tip body (108) for fluid communication from a space upstream of the upstream surface (102) to a space downstream of the downstream surface (106). The outlet orifice (104) includes a cylindrical outlet portion (110) defining an outlet axis, and a tapered inlet portion (112) upstream of the outlet portion (110). The tapered inlet portion (112) converges down towards the outlet axis in a direction from the upstream surface (102) toward the downstream surface (106).

## Description

### BACKGROUND OF THE INVENTION

### 1. Field of the Invention

The present disclosure relates to orifices for injectors, spray nozzles, and the like, and more particularly to discrete jet orifices such as used in fuel injectors for gas turbine engines.

### 2. Description of Related Art

A cylindrical bore is often used as a metering orifice for liquid or gas, such as in fuel injectors, spray nozzles, and the like. For example, U.S. Patent No. 7,251,940 describes a fuel nozzle having a fuel shroud that defines a plurality of main fuel jets disposed offset from a central axis. Each of the main fuel jets is a cylindrical bore, which can issue a discrete jet of fuel for combustion in a gas turbine engine.

Improvements have been made to decrease the effects of manufacturing variability on spray orifices like the cylindrical bores described above. For example, certain inlet geometries can reduce the effects of manufacturing inconsistencies on flow through cylindrical bores, such as the inlet geometries described in U.S. Patent Application Publication No. 2014/0166143.

Even with manufacturing variability issue addressed as described above, there is still an inherent problem with the traditional cylindrical bore geometry. Namely there is inconsistent flow and/or pressure fluctuations and instability at certain points in a given flow curve, i.e., a curve of flow rates obtained as a function of pressure. For example, there is a hysteresis effect that causes cylindrical metering orifices to provide two different flow rates at a single given pressure, depending on whether the pressure is rising or falling. This inconsistency can lead to operational challenges that must be overcome in applications where precise flow control is required.

Such conventional methods and systems have generally been considered satisfactory for their intended purpose. However, there is still a need in the art for improved flow consistency in cylindrical bores, metering orifices, discrete jet orifices, and the like. The present disclosure provides a solution for this need.

### SUMMARY OF THE INVENTION

A nozzle tip includes a nozzle tip body defining an upstream surface and an opposed downstream surface. An outlet orifice is defined through the nozzle tip body for fluid communication from a space upstream of the upstream surface to a space downstream of the downstream surface. The outlet orifice includes a cylindrical outlet portion defining an outlet axis, and a tapered inlet portion upstream of the outlet portion. The tapered inlet portion converges down towards the outlet axis in a direction from the upstream surface toward the downstream surface.

The outlet orifice can be a first outlet orifice, wherein the nozzle tip body includes at least one additional outlet orifice similar to the first outlet orifice. The outlet axes of the outlet orifices can diverge away from a central longitudinal axis defined by the nozzle tip body to issue a diverging spray pattern. The tapered inlet can converge down toward the outlet axis at an angle less than or equal to 30° and greater than or equal to 10°. The tapered inlet portion can extend over half way along the length of the outlet orifice between the upstream surface and the downstream surface. It is also contemplated that the tapered inlet portion can extend over three-quarters of the way along the length of the outlet orifice between the upstream surface and the downstream surface.

The tapered inlet portion can meet the upstream surface at an orifice inlet edge with a circumference. The orifice inlet edge can define an obtuse angle between the tapered inlet portion and the upstream surface around the full circumference of the orifice inlet edge. The tapered inlet portion can extend from the orifice inlet edge to the cylindrical outlet portion.

A nozzle includes a nozzle body defining a feed passage. The nozzle also includes a nozzle tip as in any of the embodiments described herein. The upstream surface of the nozzle tip is in fluid communication with the feed passage of the nozzle body for supplying a flow of fluid to the outlet orifice.

The feed passage can include a flow passage that feeds into the outlet orifices that is annular or helical. A heat shield can be disposed downstream of the downstream surface of the nozzle tip, wherein an aperture is defined through the heat shield aligned with the outlet orifice to permit issue of fluid from the orifice therethrough.

A method of forming a nozzle tip includes forming a nozzle tip body with opposed upstream and downstream surfaces. The method includes forming a plurality of outlet orifices through the nozzle tip body on respective orifice axes that are angled diverge away from a central longitudinal axis in a downstream direction, each outlet orifice including a cylindrical outlet portion and a tapered inlet portion upstream of the cylindrical outlet portion. Forming each outlet orifice can include forming the tapered inlet portion with an EDM tool extending through the cylindrical outlet portion. It is also contemplated that forming each outlet orifice can include forming the tapered inlet portion in a downstream portion of the nozzle tip body with a cutting tool extending from an upstream position along an orifice axis, followed by joining the downstream portion of the nozzle tip body to an upstream portion of the nozzle tip body so that the upstream portion of the nozzle tip intersects the orifice axis.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a cross-sectional perspective view of an exemplary embodiment of an injector constructed in accordance with the present disclosure, showing a nozzle with a nozzle tip with discrete jet orifices;
Fig. 2 is a cross-sectional side elevation view of the nozzle tip of Fig. 1, showing the tapered inlet portions of the discrete jet outlet orifices;
Fig. 3 is a cross-sectional side elevation view of the nozzle of Fig. 1, showing a helical feed passage;
Fig. 4 is a cross-sectional side elevation view of the nozzle of Fig. 1, showing another exemplary embodiment of a feed passage that is annular;
Figs. 5 to 7 are schematic cross-sectional side elevation views of outlet orifices in accordance with the present disclosure, all having the same taper angle on the tapered inlet portion of the outlet orifice, and each respectively showing the tapered inlet extending into the outlet orifice to a different extent;
Figs. 8 to 10 are schematic cross-sectional side elevation views of outlet orifices in accordance with the present disclosure, similar to Figs. 5 to 7, respectively, for a taper angle on the tapered inlet portion that is larger than shown in Figs. 5 to 7;
Figs. 11 to 13 are schematic cross-sectional side elevation views of outlet orifices in accordance with the present disclosure, similar to Figs. 8 to 10, respectively, for a taper angle on the tapered inlet portion that is larger than shown in Figs. 8 to 10;
Fig. 14 is a cross-sectional side elevation view of an exemplary embodiment of a nozzle tip in accordance with the present disclosure, showing the outlet orifices before the tapered inlet portions are formed; and
Fig. 15 is a cross-sectional side elevation view of an exemplary embodiment of a nozzle tip in accordance with the present disclosure, showing upstream and downstream portions of the nozzle tip joined together after forming the tapered inlet portions of the outlet orifices.

### DETAILED DESCRIPTION OF THE PREFERRED EMBODIMENTS

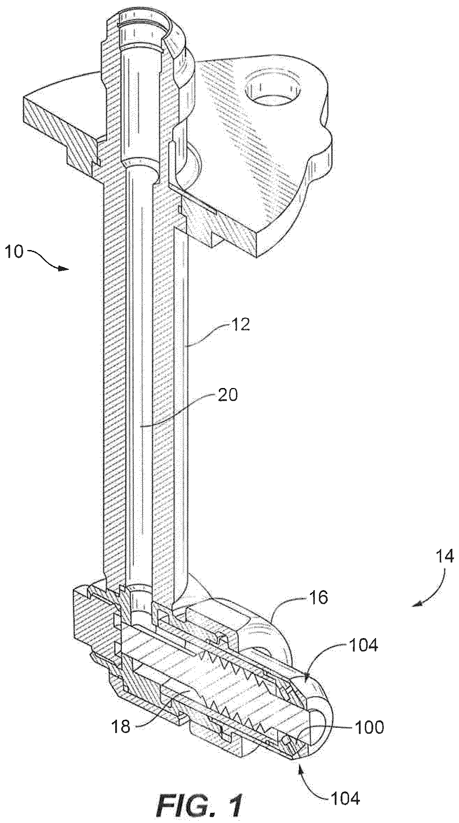

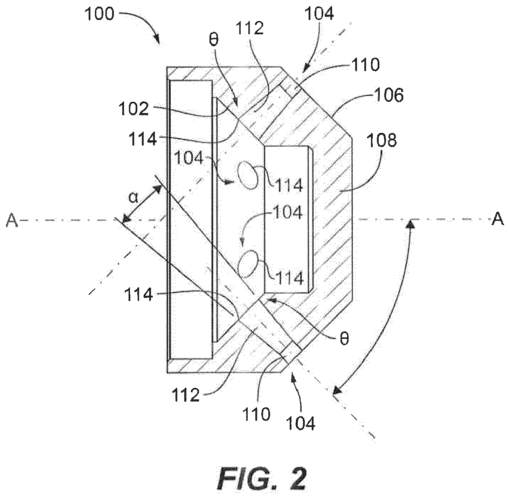

Reference will now be made to the drawings wherein like reference numerals identify similar structural features or aspects of the subject disclosure. For purposes of explanation and illustration, and not limitation, a partial view of an exemplary embodiment of a nozzle tip in accordance with the disclosure is shown in Fig. 1 and is designated generally by reference character 100. Other embodiments of nozzle tips in accordance with the disclosure, or aspects thereof, are provided in Figs. 2 to 15, as will be described. The systems and methods described herein can be used to provide consistent flow rate through discrete jet orifices as a function of pressure regardless of whether pressure is increasing or decreasing.

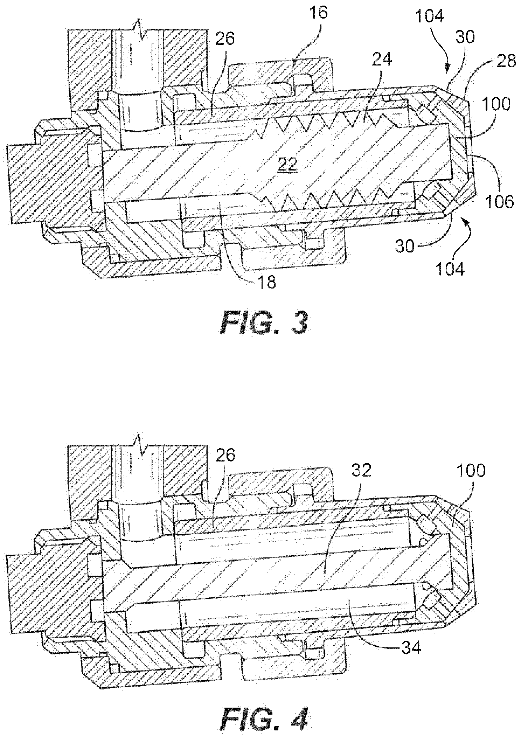

Injector 10 includes a feed arm 12 and a nozzle 14 includes a nozzle body 16. Nozzle body 16 defines a feed passage 18 that is in fluid communication with passage 20 through feed arm 12 to supply fluid to issue from nozzle 14. Nozzle 14 also includes a nozzle tip 100. The upstream surface 102 (identified in Fig. 2) of nozzle tip 100 is in fluid communication with feed passage 18 for supplying a flow of fluid to outlet orifices 104. As shown in Fig. 3, feed passage 18 includes a helical flow passage defined between helical threads 24 of helical body 22 and the inner wall 26 of nozzle body 16. Feed passage 18 feeds fluid into the outlet orifices 104 to be issued therefrom as a spray or jet, e.g., for fuel injection. Fig. 4 shows nozzle body 16 with another exemplary feed passage 34 that is annular, i.e., annular feed passage 34 is defined between centre body 32 and inner wall 26. Those skilled in the art will readily appreciate that any other suitable type of feed passage can be used without departing from the scope of this disclosure.

Referring again to Fig. 3, a heat shield 28 is disposed downstream of the downstream surface 106 of the nozzle tip 100. A respective aperture 30 is defined through heat shield 28, aligned with each outlet orifice 104 to permit issue of fluid from the orifice therethrough without interference from heat shield 28.

With reference now to Fig. 2, nozzle tip 100 includes a nozzle tip body 108 defining upstream surface 102 and the opposed downstream surface 106. Outlet orifices 104 are defined through nozzle tip body 108 for fluid communication from a space upstream of the upstream surface 102 (e.g., from feed passage 18) to a space downstream of downstream surface 106, e.g., a combustion chamber as in the combustor of a gas turbine engine. Each outlet orifice includes a cylindrical outlet portion 110 defining an outlet axis (indicated with broken lines in Fig. 2), and a tapered inlet portion 112 upstream of the outlet portion 110. The tapered inlet portion 112 converges down towards the outlet axis in a direction from the upstream surface 102 toward the downstream surface 106.

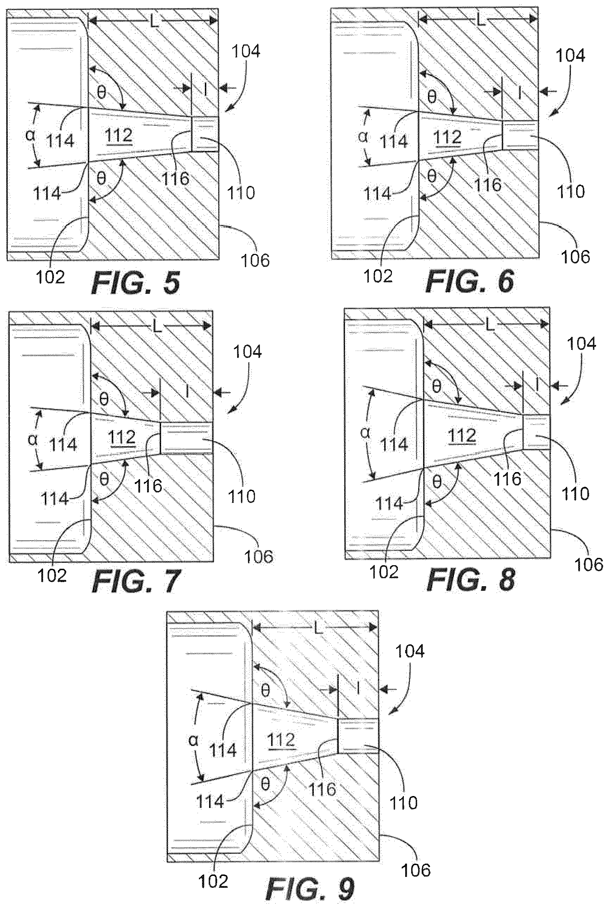

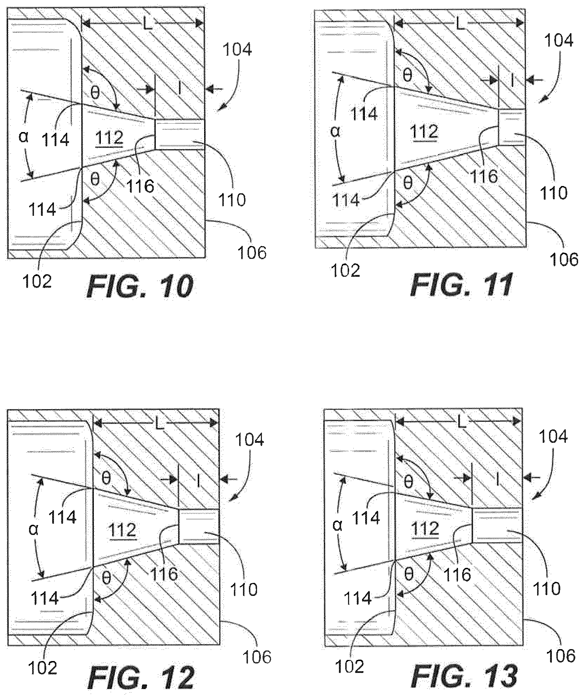

The outlet axes of the outlet orifices diverge away from a central longitudinal axis A defined by the nozzle tip body 108 to issue a diverging spray pattern. The tapered inlet 112 converges down toward the outlet axis at an angle α less than or equal to 30° and greater than or equal to 10°. The tapered inlet portion meets the upstream surface at an orifice inlet edge 114 with a circumference. The orifice inlet edge 114 of each outlet orifice 104 defines an obtuse angle θ between the tapered inlet portion and the upstream surface around the full circumference of the orifice inlet edge 114. Figs. 5 to 7 show three exemplary embodiments of orifices 104 with an angle α of greater than or equal to 10°. Figs. 11 to 13 show exemplary embodiments of orifices 104 with angles α of less than or equal to 30°. Figs. 8 to 10 show exemplary embodiments of orifices 104 with angles α between 10° and 30°. Those skilled in the art having the benefit of this disclosure will readily appreciate that larger inlet angles may result in a flowrate increase and may be easier to manufacture on an application by application basis.

With continued reference to Figs. 5 to 13, the axial length proportions of tapered inlet 112 and cylindrical outlet 110 can be varied. The tapered inlet portion 112 extends from the orifice inlet edge 114 to the cylindrical outlet portion 110, e.g., so the two portions 110 and 112 meet at an edge 116. As shown in Figs. 7, 10, and 13, the tapered inlet portion 110 can extend over a length /that is over half way along the length *L* of the outlet orifice 104 between the upstream surface 102 and the downstream surface 106, e.g., *I*/*L* > 0.50. As shown in Figs. 5, 8, and 11, the tapered inlet portion 112 can extend over three-quarters of the way along the length L of the outlet orifice 104 between the upstream surface 102 and the downstream surface 106, e.g., *I*/*L* > 0.75. As shown in Figs. 6, 9, and 12, the tapered inlet portion 112 can extend between half of the way and three-quarters of the way along the length L of the outlet orifice 104 between the upstream surface 102 and the downstream surface 106, e.g., 0.5 ≤ *I*/*L* ≤ 0.75.

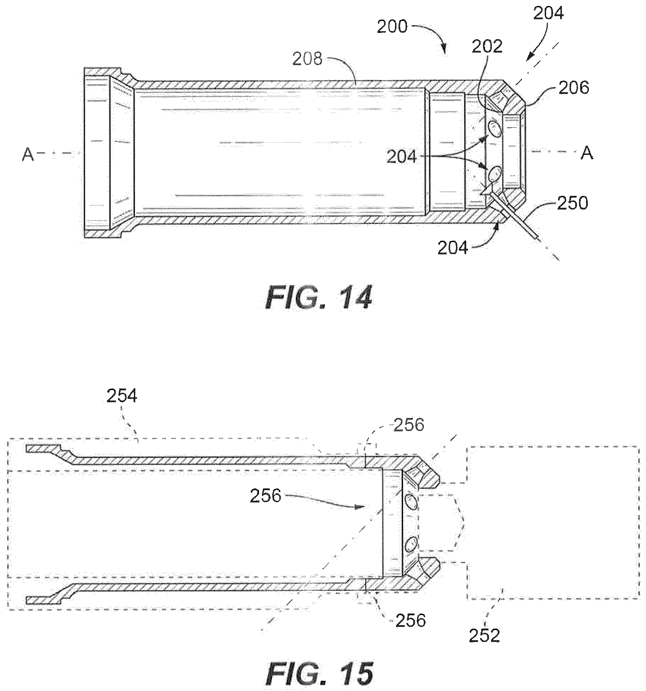

With reference now to Figs. 14 to 15, a method of forming a nozzle tip, e.g. nozzle tip 200, includes forming a nozzle tip body, e.g., nozzle tip body 208 with opposed upstream and downstream surfaces, e.g., surfaces 202 and 206. The method includes forming a plurality of outlet orifices, e.g., orifices 204, through the nozzle tip body on respective orifice axes (indicate in Figs. 14 and 15 with dashed lines) that are angled diverge away from a central longitudinal axis A in a downstream direction, as indicated in Fig. 14 with broken lines. The cylindrical portions, e.g., cylindrical outlet portions 110 described above, of the outlet orifices can be formed by any suitable process, e.g., cutting or electrical discharge machining (EDM). A tapered inlet portion, e.g., tapered inlet portions 112 described above, are formed upstream of the cylindrical outlet portions. Fig. 14 shows nozzle tip body 208 after the cylindrical portions are formed but before the tapered inlet portions are formed, and Fig. 15 shows nozzle tip body 208 with tapered inlet portions formed. As indicated schematically in Fig. 14, forming each outlet orifice can include forming the tapered inlet portion with an EDM tool, e.g., tool 250, extending through the cylindrical outlet portion, e.g., extending from the space downstream of downstream surface 206, through orifice 204, and into the space upstream of upstream surface 202. With reference to Fig. 15, it is also contemplated that forming each outlet orifice 204 can include forming the tapered inlet portion in a downstream portion 252 of the nozzle tip body 208 with a cutting tool extending from an upstream position, e.g. from the space upstream of upstream surface 202, along an orifice axis. This is followed by joining the downstream portion 252 of the nozzle tip body 208 to an upstream portion 254 of the nozzle tip body 208 so that the upstream portion 254 of the nozzle tip 200 intersects the orifice axis as indicated in Fig. 15. Portions 252 and 254 are joined at joint 256. Any portions of upstream and downstream portions 252 and 254 not needed in the finished nozzle tip 200 can be removed by conventional machining or any other suitable process. The cross-hatched portion in Fig. 15 indicates the finished nozzle tip 200, whereas the non-cross-hatched portions indicate material removed from portions 252 and 254 after they are joined together.

Were a tapered inlet orifice to have a taper that extends all the way to the downstream surface, the tapered outlet would form a sharp edge at the downstream surface. Such sharp edges can be the cause of considerable manufacturing variability. This is detrimental to metering orifices, since if multiple metering orifices have different effective diameters due to manufacturing variability, the flow rates through the different orifices will vary considerably from the intended flow rate. Cylindrical outlets like cylindrical outlet portions 110 relieve this manufacturing variability, and allow for orifices 104 to serve as metering orifices with little or no manufacturing variability impacting flow rates. When these cylindrical outlet portions 110 are used in combination with tapered inlet portions 112, the benefits of tapered passages are added to the benefits of cylindrical outlets. In particular, the hysteresis effects described above for purely cylindrical metering orifices can be reduced or eliminated, while also reducing or eliminating the issues of manufacturing variability in tapered orifices.

The methods and systems of the present disclosure, as described above and shown in the drawings, provide for discrete jet orifices with superior properties including consistent flow rate as a function of pressure regardless of whether pressure is increasing or decreasing. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A nozzle tip comprising:
a nozzle tip body defining an upstream surface and an opposed downstream surface, wherein an outlet orifice is defined through the nozzle tip body for fluid communication from a space upstream of the upstream surface to a space downstream of the downstream surface, wherein the outlet orifice includes a cylindrical outlet portion defining an outlet axis, and a tapered inlet portion upstream of the outlet portion, wherein the tapered inlet portion converges down towards the outlet axis in a direction from the upstream surface toward the downstream surface.

2. The nozzle tip as recited in claim 1, wherein the outlet orifice is a first outlet orifice and wherein the nozzle tip body includes at least one additional outlet orifice, wherein each of the outlet orifices includes a cylindrical outlet portion defining a respective outlet axis, and a tapered inlet portion upstream of the outlet portion, wherein the tapered inlet portion converges down towards the outlet axis in a direction from the upstream surface toward the downstream surface.

3. The nozzle tip as recited in claim 2, wherein the outlet axes of the outlet orifices diverge away from a central longitudinal axis defined by the nozzle tip body to issue a diverging spray pattern.

4. The nozzle tip as recited in any preceding claim, wherein the tapered inlet converges down toward the outlet axis at an angle less than or equal to 30°.

5. The nozzle tip as recited in any preceding claim, wherein the tapered inlet converges down toward the outlet axis at an angle greater than or equal to 10°.

6. The nozzle tip as recited in any preceding claim, wherein the tapered inlet portion extends over half way along the length of the outlet orifice between the upstream surface and the downstream surface.

7. The nozzle tip as recited in any preceding claim, wherein the tapered inlet portion extends over three-quarters of the way along the length of the outlet orifice between the upstream surface and the downstream surface.

8. The nozzle tip as recited in any preceding claim, wherein the tapered inlet portion meets the upstream surface at an orifice inlet edge with a circumference, wherein the orifice inlet edge defines an obtuse angle between the tapered inlet portion and the upstream surface around the full circumference of the orifice inlet edge.

9. The nozzle tip as recited in claim 8, wherein the tapered inlet portion extends from the orifice inlet edge to the cylindrical outlet portion.

10. A nozzle comprising:
a nozzle body defining a feed passage; and
a nozzle tip as recited in any preceding claim, wherein the upstream surface of the nozzle tip is in fluid communication with the feed passage of the nozzle body for supplying a flow of fluid to the outlet orifice.

11. The nozzle as recited in claim 10, wherein the outlet orifice is a first outlet orifice and wherein the nozzle tip body includes at least one additional outlet orifice, wherein each of the outlet orifices includes a cylindrical outlet portion defining a respective outlet axis, and a tapered inlet portion upstream of the outlet portion, wherein the tapered inlet portion converges down towards the outlet axis in a direction from the upstream surface toward the downstream surface.

12. The nozzle as recited in claim 11, wherein the outlet axes of the outlet orifices diverge away from a central longitudinal axis defined by the nozzle tip body to issue a diverging spray pattern.

13. The nozzle as recited in claim 11 or claim 12, wherein the feed passage includes a flow passage that feeds into the outlet orifices that is at least one of annular or helical.

14. The nozzle as recited in any of claims 10 to 13, further comprising a heat shield disposed downstream of the downstream surface of the nozzle tip, wherein an aperture is defined through the heat shield aligned with the outlet orifice to permit issue of fluid from the orifice therethrough.

15. A method of forming a nozzle tip comprising:
forming a nozzle tip body with opposed upstream and downstream surfaces;
and
forming a plurality of outlet orifices through the nozzle tip body on respective orifice axes that are angled diverge away from a central longitudinal axis in a downstream direction, each outlet orifice including a cylindrical outlet portion and a tapered inlet portion upstream of the cylindrical outlet portion, wherein forming each of the outlet orifices includes at least one of:
forming the tapered inlet portion with an EDM tool extending through the cylindrical outlet portion; or
forming the tapered inlet portion in a downstream portion of the nozzle tip body with a cutting tool extending from an upstream position along an orifice axis, followed by joining the downstream portion of the nozzle tip body to an upstream portion of the nozzle tip body so that the upstream portion of the nozzle tip intersects the orifice axis.
